# EUROPÄISCHE PATENTSCHRIFT

(11) **EP 0 590 398 B1**
(45) Veröffentlichungstag und Bekanntmachung des Hinweises auf die Patenterteilung: **16.04.1997**
(21) Anmeldenummer: 93114668.2
(22) Anmeldetag: 13.09.1993
(51) Int. Cl.: C08G 18/10, C08G 18/42, C08G 18/76, C09J 175/04, B32B 27/04

(54) **Lösungsmittelfreie Zweikomponentenpolyurethanklebstoffsysteme**
Solventless two-component polyurethane adhesive systems
Systèmes d'adhésifs de polyuréthane sans solvant à deux composants

(30) Priorität: 24.09.1992 DE 4232015
(43) Veröffentlichungstag der Anmeldung: 06.04.1994
(73) Patentinhaber: BAYER AG, 51368 Leverkusen (DE)
(72) Erfinder: Meckel, Walter, Dr., D-41468 Neuss (DE); Hänsel, Eduard, Dr., D-40767 Langenfeld (DE); König, Klaus, Dr., D-51519 Odenthal (DE); Ganster, Otto, Dr., D-51519 Odentahl (DE); Büchner, Jörg, D-51467 Bergisch Gladbach (DE)

(56) Entgegenhaltungen:
- EP-A- 0 166 962
- US-A- 3 908 043
- US-A- 3 915 935

## Beschreibung

Sowohl aus ökologischen als auch ökonomischen Gründen geht der Trend immer mehr zu lösungsmittelfreien Beschichtungssystemen. Um das gesetzte hohe Niveau der derzeitigen lösungsmittelhaltigen Produkte auch nur annähernd zu erreichen, sind in den letzten Jahren viele Versuche unternommen worden, die Schwachstellen der lösungsmittelfrei anzuwendenden Beschichtungssysteme zu minimieren. Schwachstellen sind naturgemäß in der nicht zur Deckung zu bringenden Forderung nach niedrigem Molekulargewicht, oder anders ausgedrückt niedrigen Viskosität, um den Verzicht auf Lösungsmittel überhaupt erst zu ermöglichen, und dem Wunsch nach der sofortigen Weiterverarbeitung der hergestellten Artikel, um auf eine aufwendige Lagerung und Kontrolle der Artikel zu verzichten.

Leicht meßbare Größen in diesem Rahmen sind insbesondere die anfängliche Belastbarkeit durch Streß, die sich als Anfangsfestigkeit beschreiben läßt, die direkte Weiterverarbeitungsprozesse erst nach Erreichen einer gewissen Größe erlaubt.

Schwieriger zu beurteilende Kriterien sind die bei Verwendung von niedermolekularen Verbindungen auftretende Probleme, die sich unter dem Sammelbegriff der Migration zusammenfassen lassen.

Hierbei handelt es sich um die Wanderung von niedermolekularen Verbindungen aus der Beschichtung heraus in die Umgebung. Als Hauptverursacher für die Migration werden die monomeren Diisocyanate oder eventuelle niedere Oligomere angesehen.

Diese Migration kann zu Beeinträchtigungen, ja in Extremfällen zur vollständigen Verhinderung der Weiterverarbeitung führen. Darüber hinaus werden insbesondere bei Produkten, die dem Kontakt mit Lebensmitteln ausgesetzt sind, vom Gesetzgeber strengste Auflagen vorgegeben, denen die hergestellten Artikel genügen müssen, da von diesen migrationsfähigen Verbindungen oder deren Abbauprodukten unter Umständen gesundheitliche Gefährdungen ausgehen können.

Die Herstellung von Verbundfolien für die Verpackungsindustrie nimmt einem immer stärkeren Umfang an, da durch die Kombination von verschiedenen Folien eine Verbundfolie mit Eigenschaften nach Maß aufgebaut werden kann. Polyurethane sind die Klebstoffe der Wahl, da sie eine gute Verbundhaftung der Folien untereinander gewährleisten, geruchsfrei sind und wegen ihrer Transparenz keine optische Beeinträchtigung der zu verpackenden Güter bewirken.

Die gängigen Zweikomponentensysteme, die zur Zeit in der Industrie eingesetzt werden sind Polyesterpolyole, die mit Isocyanatgruppen enthaltenden Prepolymeren auf Diphenylmethandiisocyanatbasis umgesetzt werden; solche Systeme geben hohe Anfangsfestigkeiten, aber neigen bei nicht sachgemäßer Handhabung (z.B. Überdosierung des Prepolymeren) zu erhöhter Migratbildung.

Einen Fortschritt bieten Systeme, wie sie in den Patentschriften EP 150 444 und EP 464 483 vorgeschlagen wurden. Aber die in EP 150 444 vorgeschlagenen Isocyanatgruppen enthaltenden Prepolymere oder die in EP 464 483 beschriebenen Harnstoffgruppen enthaltenden Polyole sind nur mit einem erhöhten analytischen Aufwand herzustellen. Zudem sind Produkte mit dieser Zusammensetzung oft hochviskos, was unter Umständen zu Verarbeitungsschwierigkeiten führen kann. Es besteht also in der Industrie nach wie vor der Wunsch nach Systemen, die die oben gestellten Bedingungen, nämlich bei möglichst niedrigen Viskositäten weitgehend migrationsfreie Klebstoffsysteme mit hoher Anfangsfestigkeit zu geben, erfüllen, bzw. nahe zu kommen.

Der Weg der Wahl sind Zweikomponentensysteme, die von niedermolekularen Polyolen und Polyisocyanaten ausgehend auf dem Substrat das polymere Polyurethan erzeugen. Zum raschen Erreichen der Endeigenschaften werden Systeme mit einer über zwei liegenden Gesamtfunktionalität angestrebt, um durch Verzweigung schnell ein hochmolekulares System zu erreichen.

Gegenstand der vorliegenden Erfindung sind demnach lösungsmittelfreie Zweikomponentenpolyurethansysteme zur Herstellung von Folienverbunden mit hoher Anfangsfestigkeit und niedrigen Migrationswerten, auf Basis von Hydroxylpolyestern (A) und Isocyanatgruppen enthaltenden Prepolymeren (B) in einem Verhältnis der Hydroxylgruppen zu freien Isocyanatgruppen von 1:1,05 bis 1:2,0, dadurch gekennzeichnet, daß der Hydroxylpolyester
A mit einer Hydroxylzahl von 80 bis 200 aus
   54 bis 58 mol-% einer Polyolmischung aus (i) 70 bis 90 mol-% Hexandiol-1,6 und (ii) 10 bis 30 mol-% mindestens eines höherwertigen Alkohols, ausgewählt aus der Gruppe bestehend aus Trimethylolpropan, Glyzerin, Pentaerythrit und Gemischen dieser Polyole, und
   46 bis 42 mol-% einer Dicarbonsäuremischung aus (iii) 50 bis 80 mol-% Isophthalsäure, (iv) 30 bis 20 mol-% mindestens einer Dicarbonsäure der Formel HOOC-(CH₂)ₙ-COOH (n = eine ganze Zahl von 2 bis 8) und (v) 0 bis 20 mol-% mindestens einer Dicarbonsäure oder mindestens eines Dicarbonsäureanhydrids, ausgewählt aus der Gruppe bestehend aus Terephthalsäure, Phthalsäure, Phthalsäureanhydrid, Tetrahydro- bzw. Hexahydropthalsäureanhydrid, besteht,
   und das Isocyanatgruppen enthaltende Prepolymer
B aus Polyetherpolyolyolen mit einem mittleren Molekulargewicht von 400 bis 1500, 2,4- oder 2,6-Toluylendiisocyanat und deren Gemischen besteht und einen Monomergehalt von kleiner 0,15 Gew.-% und einen Isocyanatgehalt zwischen 4 und 11 Gew.-% aufweist.

Die Vorteile einer solchen spezifischen Zusammensetzung waren überraschend und für den Fachmann in keiner Weise vorauszusehen, da selbst normalerweise geringfügige Änderungen in der Zusammensetzung des Hydroxylpolyesters (A) in Kombination mit Toluylendiisocyanatprepolymeren auf Polyetherbasis zu einer drastischen Abnahme der Anfangs- und zum Teil auch der Endfestigkeiten führen.

Die Herstellung der erfindungsgemäß zu verwendenden Hydroxylpolyester erfolgt in an sich bekannter Weise nach Methoden wie sie beispielsweise in "Ullmanns Enzyklopädie der technischen Chemie", Verlag Chemie Weinheim, 4. Auflage (1980), Seite 61f ausführlich beschrieben sind.

Besonders bevorzugt zu verwendende Hydroxylpolyester sind auf Basis von Hexandiol-1,6, Trimethylolpropan und Isophthalsäure, Adipinsäure und gegebenenfalls Phthalsäure oder Phthalsäureanhydrid aufgebaut.

Die Hydroxylzahl sollte bevorzugt zwischen 100 und 180, und die Säurezahl kleiner 5, bevorzugt kleiner 1,5 sein.

Da bei den Zweikomponentensystemen immer mit einem Isocyanatüberschuß gearbeitet wird, und somit Isocyanatgruppen enthaltende Komponenten am Ende der Reaktion im Überschuß vorliegen und anschließend nur durch Reaktion mit der immer vorhandenen Luft-und/oder Substratfeuchtigkeit abreagieren, können diese bis zur endgültigen Isocyanatfreiheit zu Migrationen Anlaß geben. Eine unabdingbare Forderung für Klebstoffe, die zu migrationsarmen Folienverbunden führen, ist deshalb die Verwendung von Isocyanatgruppen enthaltenden Prepolymeren mit einem sehr niedrigen Monomergehalt.

Die Herstellung der erfindungsgemäß zu verwendenden Isocyanatgruppen enthaltenden Prepolymere mit einem Monomergehalt von kleiner 0,15, besonders bevorzugt kleiner 0,1 Gew.-% und einem Isocyanatgehalt von 4 bis 11, bevorzugt 5 bis 10 Gew.-% aus Polyetherpolyolen und 2,4- oder 2,6-Toluylendiisocyanat oder deren Gemischen kann nach verschiedenen Methoden erfolgen.

So führt die Verwendung eines hohen Überschusses von Toluylendiisocyanat mit einem Isocyanat- zu Hydroxylgruppenverhältnis von größer zwei zu Prepolymeren mit hohen Monomergehalt, der jedoch durch Abdestillieren oder Extrahieren des überschüssigen Monomeren, unter Umständen unter Mitverwendung eines inerten Schleppmittels auf Werte kleiner 0,15 Gew.-% gedrückt werden kann; solche Prepolymeren zeichnen sich durch besonders niedrige Viskositäten aus.

Die Polyetherpolyole mit Molekulargewichten zwischen 200 und 2000 können nach bekannten Verfahren durch Anlagerung von Ethylen- und/oder Propylenoxid, vorzugsweise Propylenoxid an Starter wie beispielsweise Wasser, Propylenglykol, 2,2-(bis-4,4'-hydroxyphenyl)-Propan, Trimethylolpropan, Glyzerin oder Pentaerythrit erhalten werden. Ebenfalls sind Tetramethylenetherglykole einsetzbar.

Um einen bevorzugten Bereich in Bezug auf Viskosität und Isocyanatgehalt einzustellen, wird mit Polyolgemischen gearbeitet, die vorzugsweise ein mittleres Molekulargewicht von 400 bis 1500 und eine mittlere Funktionalität von 2,00 bis 2,5 aufweien; so sind monomerenarme Prepolymere aus Polyolen mit einem Molekulargewicht unter 400 wegen der hohen Urethankonzentration für eine problemlose Verarbeitung zu hochviskos. Die obere Abgrenzung bei mittleren Molgewichten über 1500 ergibt sich dadurch, daß der Isocyanatgehalt sehr niedrig wird, was sich in einem sehr ungünstigen Mischungsverhältnis der Isocyanat zu Hydroxylkomponente niederschlägt.

Besonders bevorzugt sind Isocyanatgruppen enthaltende Prepolymere, die nach einem besonders einfachen technischen Verfahren nach DE 41 36490 gewonnen werden können, aus Polyetherpolyolgemischen der mittleren Funktionalität 2,05 bis 2,5, bevorzugt 2,06 bis 2,25 mit mindestens 90, bevorzugt 100 % sekundären Hydroxylgruppen und 2,4-Toluylendiisocyanat in einem Verhältnis der Isocyanatgruppen zu Hydroxylgruppen von 1,6 zu 1 bis 1,8 zu 1. Die Herstellung der Isocyanatgruppen enthaltenden Prepolymere erfolgt in normalen Rührkesseln, indem bei Temperaturen von 40 bis 100, vorzugsweise 60 bis 90°C die Polyole zu den Diisocyanaten zudosiert werden, und die Reaktion bis zur Erreichung eines konstanten Isocyanatgehaltes geführt wird.

Zur Entfernung von monomeren Toluylendiisocyanat kann das Prepolymer anschließend einem Dünnschichtverdampfer zugeführt werden. Es kann aber auch von Vorteil sein, daß den Prepolymeren während oder nach der Herstellung Wasser (EP 464 483, EP 340 584) oder niedermolekulare Alkohole (DOS 2 414 391) oder disekundäre Alkohole ( DE 41 364 90 ) zugesetzt werden.

Den erfindungsgemäß zu verwendenden Hydroxylpolyestern, können für besondere Effekte in untergeordneten Mengen andere Hydroxylverbindungen, wie beispielsweise Rizinusöl, Polyetherester wie sie in EP 340 586, bevorzugt unter Verwendung von Hexandiol-1,6, beschrieben werden, oder bis zu 10 Gew.-% Triisopropanolamin, zugegeben werden.

Ebenso ist die Modifizierung der erfindungsgemäß zu verwendenden Isocyanatgruppen enthaltenden Prepolymeren mit anderen Polyisocyanaten nicht ausgeschlossen, sofern der freie Monomergehalt sich dadurch nicht auf Werte über 0,15 Gew.-% erhöht.

Die Mischung der Polyol- und Polyisocyanatkomponente ist naturgemäß nicht lagerfähig. Ein durch inniges Vermischen der Reaktionspartner hergestellte Mischung ist in der Regel bei 20°C und 50 % Luftfeuchtigkeit 0,25 bis 12 Stunden verarbeitungsfähig, je nach Auswahl der Reakionspartner und der stöchiometrischen Mischungsverältnisse. Bevorzugt ist kontinuierliches, maschinell geregeltes Mischen der beiden Reaktionspartner kurz vor dem Zeitpunkt der Applikation auf die Folie.

Das Mischungsverhältnis der Hydroxylgruppen enthaltenden Komponente und der Isocyanatgruppen enthaltenden Komponente richtet sich nach den Gegebenheiten, wie beispielsweise gewünschter Folienverbund und sollte in Bezug auf das Verhältnis der Hydroxylgruppen zu Isocyanatgruppen zwischen 1 und 1,05 und 1 zu 2,0, vorzugsweise zwischen 1 zu 1,15 und 1 zu 1,7 liegen.

Je nach Viskosität der Reaktionspartner erfolgt das Mischen bei erhöhter Temperatur, um gut zu verarbeitende Viskositäten zu erhalten. Möglich sind Verarbeitungstemperaturen bis 100°C, bevorzugt bis 80°C, besonders bevorzugt von 20 bis 50°C.

Die lösungsmittelfreie Applikation der Klebstoffmischung erfolgt durch eine Kombination von Auftrags-, Kaschier- und Wickelsystemen, wie zum Beispiel eine "VARICOATER LF"-Anlage der Fa. Windmöller und Hölscher, Lengerich oder eine "POLYTEST 440" LF-Kaschieranlage der Fa. Polytype in Freiburg, Schweiz.

Zu weiteren Einzelheiten der Herstellung von Verbundfolien vgl. auch DOS 2 549 227 oder H. Hinsken in Kunststoffe 77, 461 (1987).

Als Auftragsmenge werden, abhängig vom Auftragsverfahren, Folientyp und Bedingungen, wie z.B. Druckfarben, ca. 0,8 bis 8,0, bevorzugt 1,0 bis 4,0 g/m² Klebstoff aufgetragen.

Als klebtechnische Hilfs- und/oder Zusatzstoffe kann die Mischung z.B. Reaktionsbeschleuniger, wie beispielsweise Zinn-IV-Verbindungen oder tertiäre Amine, Füllstoffe, Weichmacher oder Gleitmittel und Pigmente enthalten.

Möglich ist auch der Zusatz von dem Fachmann bekannten Stabilisatoren, Lichtschutzmitteln und Feuchtigkeitsadsorbentien. Zur Verbesserung bestimmter Klebeigenschaften können dem Klebstoff auch Haftvermittler, wie z.B. Silane zugesetzt werden.

### Beispiele

### Hydroxylpolyester (A)

### A-1 (erfindungsgemäß zu verwenden)

Hydroxylpolyester mit einer Hydroxylzahl von 163 und einer Säurezahl von 1,3 aus

| | |
|---|---|
| 3,92 Mol Hexandiol-1,6 | (80 Mol-%) |
| 1,00 Mol Trimethylolpropan | (20 Mol-%) |
| 2,70 Mol Isophthalsäure | (70 Mol-%) |
| 1,17 Mol Adipinsäure | (30 Mol-%) |

### A-2 (erfindungsgemäß zu verwenden)

Hydroxylpolyester mit einer Hydroxylzahl von 142 und einer Säurezahl von 0,8 aus

| | |
|---|---|
| 4,00 Mol Hexandiol-1,6 | (80 Mol-%) |
| 1,00 Mol Trimethylolpropan | (20 Mol-%) |
| 2,50 Mol Isophthalsäure | (63 Mol-%) |
| 1,00 Mol Adipinsäure | (25 Mol-%) |
| 0,50 Mol Phthalsäure | (12 Mol-%) |

### A-3 (erfindungsgemäß zu verwenden)

Hydroxylpolyester mit einer Hydroxylzahl von 163 und einer Säurezahl von 1,5 aus

| | |
|---|---|
| 3,20 Mol Hexandiol-1,6 | (76 Mol-%) |
| 1,00 Mol Trimethylolpropan | (24 Mol-%) |
| 2,00 Mol Isophthalsäure | (63 Mol-%) |
| 1,00 Mol Adipinsäure | (25 Mol-%) |
| 0,40 Mol Phthalsäure | (12 Mol-%) |

### A-4 (nicht erfindungsgemäß zu verwenden)

Hydroxylpolyester mit einer Hydroxylzahl von 177 und einer Säurezahl von 1,6 aus

| | |
|---|---|
| 3,30 Mol Hexandiol-1,6 | (77 Mol-%) |
| 1,00 Mol Trimethylolpropan | (23 Mol-%) |
| 1,03 Mol Isophthalsäure | (36 Mol-%) |
| 1,46 Mol Adipinsäure | (50 Mol-%) |
| 0,41 Mol Phthalsäure | (14 Mol-%) |

### A-5 (nicht erfindungsgemäß zu verwenden)

Hydroxylpolyester mit einer Hydroxylzahl von 147 und einer Säurezahl von 0,5 aus

| | |
|---|---|
| 4,00 Mol Diethylenglykol | (75 Mol-%) |
| 1,00 Mol Trimethylolpropan | (23 Mol-%) |
| 2,50 Mol Isophthalsäure | (63 Mol-%) |
| 1,00 Mol Adipinsäure | (25 Mol-%) |
| 0,50 Mol Phthalsäure | (13 Mol-%) |

### Sonstige verwandte Polyole

### A-6

Hydroxylpolyester mit einer Hydroxylzahl von 70,5 und einer Säurezahl von 0,5 aus
1,00 Mol Polypropylenetherglykol (MG 1000)
2,00 Mol Hexandiol-1,6
2,00 Mol Phthalsäureanhydrid

### A-7

Hydroxylpolyester mit einer Hydroxylzahl von 112 und einer Säurezahl von 0,8 aus
1,00 Mol Adipinsäure
1,25 Mol Neopentylglykol

### Isocyanatgruppen enthaltende Prepolymere (B)

### B-1 (erfindungsgemäß zu verwenden)

Ein Polyolgemisch der mittleren Funktionalität 2,1 aus

| | |
|---|---|
| 1000 g (1,00 Mol) | Polypropylenetherglykol (MG 1000) |
| 145 g (0,67 Mol) | Polypropylenetherglykol (MG 216) |
| 81 g (0,18 Mol) | Trimethylolpropan gestartetes Polypropylenethertriol (MG 450) werden mit |
| 2030 g (11,65 Mol) | Toluylendiisocyanat mit 80 Gew.-% des 2,4- und 20 Gew.-% des 2,6-Isomeren |

bei 70°C prepolymerisiert.

Das Prepolymere mit einem Isocyanatgehalt von 24,5 % wird über einen Dünnschichtverdampfer vom monomeren Toluylendiisocyanat befreit.

| | |
|---|---|
| Isocyanatgehalt | 8,8 % |
| Monomerengehalt | <0,10 % |
| Viskosität | 5000 mPas bei 50°C |

### B-2 (erfindungsgemäß zu verwenden)

Ein Polyolgemisch der mittleren Funktionalität 2,2 aus

| | |
|---|---|
| 1000 g (1,00 Mol) | Polypropylenetherglykol (MG 1000) |
| 93 g (0,43 Mol) | Polypropylenetherglykol (MG 216) |
| 158 g (0,36 Mol) | Trimethylolpropan gestartetes Polypropylenethertriol (MG 450) werden mit |
| 2113 g (12,10 Mol) | Toluylendiisocyanat mit 80 Gew.-% des 2,4- und 20 Gew.-% des 2,6-Isomeren |

bei 70°C prepolymerisiert.

Das Prepolymere mit einem Isocyanatgehalt von 24,9 % wird über einen Dünnschichtverdampfer vom monomeren Toluylendiisocyanat befreit.

| | |
|---|---|
| Isocyanatgehalt | 8,8 % |
| Monomerengehalt | <0,10 % |
| Viskosität | 5000 mPas bei 50°C |

### B-3 (erfindungsgemäß zu verwenden)

Ein Polyolgemisch der mittleren Funktionalität 2,1 aus

| | |
|---|---|
| 1000 g (1,00 Mol) | Polypropylenetherglykol (MG 1000) |
| 145 g (0,67 Mol) | Polypropylenetherglykol (MG 216) |
| 81 g (0,18 Mol) | Trimethylolpropan gestartetes Polypropylenethertriol (MG 450) werden mit |
| 583 g (3,35 Mol) | 2,4-Toluylendiisocyanat |

bei 70°C prepolymerisiert.

| | |
|---|---|
| Isocyanatgehalt | 6,1 % |
| Monomerengehalt | <0,10 % |
| Viskosität | 16000 mPas bei 50°C |

### B-4 (erfindungsgemäß zu verwenden)

Zu 14400 g 2,4-Toluylendiisocyanat werden 45000 g Polypropylenetherglykol (MG 1000) bei 70°C gegeben und bei dieser Temperatur bis zum Erreichen eines konstanten Isocyanatgehaltes von 5,48 % gerührt, über einen Zeitraum von zwei Stunden werden 122 g Wasser zugegeben. Nach 3 Stunden wird abgefüllt.

| | |
|---|---|
| Isocyanatgehalt | 4,30 % |
| Monomerengehalt | <0,10 % |
| Viskosität | 8000 mPas bei 50°C |

### B-5 (nicht erfindungsgemäß zu verwenden)

1000 g (4,65 Mol) Polypropylenetherglykol (MG 215) werden mit
4775 g (19,1 Mol) Diphenylmethandiisocyanat
bei 70°C umgesetzt.

| | |
|---|---|
| Isocyanatgehalt | 20,5 % |
| Monomerengehalt | 45 % |

### Herstellung der Klebstoffmischungen

Die Polyolkomponenten werden, wenn notwendig intensiv gemischt und mit der Polyisocyanatkomponente bei 40°C gemischt und sofort verarbeitet. Unter der Kennzahl (KZ) ist das Verhältnis der Isocyanatgruppen zu Hydroxylgruppen angegeben.

| | Polyolkomponente (g) | | OH-Zahl | Polyisocyanatkomponente (g) | | KZ |
|---|---|---|---|---|---|---|
| M-1 | 100 | A-1 | 163 | 397 | B-4 | 140 |
| M-2 | 100 | A-2 | 142 | 345 | B-4 | 140 |
| M-3 | 100 | A-1 | 197 | 505 | B-4 | 140 |
| | 5 TIPA* | | | | | |
| M-4 | 100 | A-2 | 142 | 243 | B-3 | 140 |
| M-5 | 100 | A-3 | 163 | 428 | B-4 | 140 |
| M-6 | 100 | A-2 | 142 | 170 | B-1 | 140 |
| M-7 | 100 | A-2 | 142 | 170 | B-2 | 140 |
| M-8 | 75 | A-2 | 124 | 224 | B-3 | 140 |
| | 25 | A-6 | | | | |
| | | | | | | |
| *TIPA = Trisisopropanolamin | | | | | | |
| | | | | | | |
| Vergleich | | | | | | |
| M-9 | 100 | A-5 | 147 | 257 | B-3 | 140 |
| M-10 | 100 | A-4 | 177 | 431 | B-4 | 140 |
| M-11 | 100 | A-7 | 112 | 57 | B-5 | 140 |

M-9 ist nicht erfindungsgemäß, da Hydroxylpolyester A-5 kein Hexandiol-1,6 enthält.
M-10 ist nicht erfindungsgemäß, da Hydroxylpolyester A-4 zu wenig Isophthalsäure enthält.
M-11 ist nicht erfindungsgemäß, da das Isocyanatgruppen enthaltende Prepolymere B-5 einen Monomergehalt von >0,15 Gew.-% enthält.

Auswahl der in den Beispielen genannten Folien und Folienverbunde, Erklärung der Abkürzungen:
- ALU :: Aluminiumfolie, 40 µ, glänzende Seite wird kaschiert
- PA :: Polyamidfolie, ungereckt, 50 µ
- PE :: Polyethylen, 50 µ, gleitmittelhaltig, coronarisiert
- PETP :: Polyesterfolie, 75 µ

- PA/PE =: Verbund 1
- PP/PE =: Verbund 2
- PETP/PE =: Verbund 3
- Alu/PE =: Verbund 4

Auftragsmenge 2 bis 3 g Klebstoff pro m².

Die Auswahl der Prüfmuster erfolgt aus einem mindestens 20 m langen, um eine Hülse gewickelten Laminat von 30 bis 100 cm Bahnbreite. Die Prüfmuster werden nach Abwickeln von 5 Wickellagen aus der Mitte der Verbundfolienbahn ausgeschnitten.

Die Verbundsfestigkeitsprüfungen erfolgen jeweils 24 Stunden und 1 Woche nach der Herstellung der Folien. Vom Zeitpunkt der Herstellung werden die Folien in einem klimatisierten Raum bei 23°C und 50 % Luftfeuchte gelagert.

### Prüfungsdurchführung:

Je 15 mm breie Streifen der Laminate werden mit der Schlagschere auf ca. 30 cm Länge kantenparallel geschnitten. Die Verbundprüfung erfolgt als T-Schälung in Anlehnung an DIN 53289 mit einer VNGG-Prüfmaschine der Fa. Brugger, München, mit 100 mm/min Abzugsgeschwindigkeit auf mindestens 10 cm Prüflänge. Die Angaben erfolgen in Newton/15 mm. Alle Ergebnisse sind Mittelwerte aus Doppelbestimmungen.

| | Verbund 1 | Verbund 2 | Verbund 3 | Verbund 4 |
|---|---|---|---|---|
| | 24H/7d | 24h/7d | 24h/7d | 24h/7d |
| M-1 | 0,9/4,0 | 1,2/9,5+ | 1,2/4,5 | 0,8/2,3 |
| M-2 | 1,2/6,4+ | 1,6/7,8+ | 2,4/4,4 | 1,0/2,5 |
| M-3 | 2,2/5,5 | 2,3/3,6 | 2,9/4,7 | 2,0/2,2 |
| M-4 | 2,0/4,5 | | 1,9/2,6+ | 1,4/2,4 |
| M-5 | 1,0/4,3 | 1,3/3,1 | 1,7/3,2 | 1,6/1,6 |
| M-6 | 2,5/3,4 | | 2,2/4,0+ | 2,5/4,4 |
| M-7 | 3,9/5,0 | | 1,7/4,4+ | 2,5/4,3 |
| M-8 | 1,5/4,3 | | 2,2/3,6+ | 2,0/2,2 |
| | | | | |
| Vergleich | | | | |
| M-9 | 0,5/5,0 | | 0,2/1,8 | 0,3/2,2 |
| M-10 | 0,2/3,4 | 0,5/3,6 | 0,7/3,5 | 0,2/1,9 |
| M-11 | 3,0/3,5 | 4,8/6,9 | 7,2/6,3+ | 9,0/6,4+ |

| | | | | |
|---|---|---|---|---|
| + = Folienabriß | | | | |

Mischungen 9 und 10 zeigen zu niedrige Anfangsfestigkeiten.

### Migrationsuntersuchungen an Verbund 1 und 11

Die Bestimmung der Migratwerte von aromatischen Polyisocyanaten erfolgt in Anlehnung an die Methode nach Paragraph 35 LMBG.

Der zu untersuchende Folienverbund wird als Rollenmuster im Klimaraum bei 23°C und 50 % rel. Feuchte gelagert. Nach 1, 2, 3, ... 10 Tagen werden jeweils 10 Lagen Folienbann abgewickelt und je zwei Prüflinge zur Herstellung der Prüfbeutel (Kontaktfläche mit den Prüflebensmitteln 2 dm² entnommen.

Die Prüfbeutel werden mit auf 70°C aufgewärmten 100 ml dest. Wasser bzw. 100 ml 3%iger Essigsäure gefüllt, verschweißt und bei 70°C für zwei Stunden gelagert. Unmittelbar nach der Lagerung werden die Beutel entleert und die Prüflebensmittel auf Raumtemperatur abgekühlt.

Der Nachweis der migrierten Polyisocyanate erfolgt durch Diazotierung der im Prüflebensmittel vorhandenen aromatischen Amine und anschließende Kupplung mit N-(1-Naphthyl)ethylendiamin.

Zur quantitativen Bestimmung werden die Extinktionswerte der Kupplungskomponente gegen die jeweilige O-Probe vermessen, und die Werte anhand einer Eichkurve in µg Aniliniumhydrochlorid/100 ml Prüflebensmitel umgerechnet.

| Tage | Prüflebensmittel | | | | | | | |
|---|---|---|---|---|---|---|---|---|
| | dest. Wasser | | | | 3 %ige Essigsäure | | | |
| | M-4 | | M-11 | | M-4 | | M-11 | |
| 1 | 0,50 | 0,54 | > 5 | | 0,30 | 0,30 | > 5 | |
| 2 | 0,35 | 0,45 | > 5 | | nd | nd | > 5 | |
| 3 | 0,21 | 0,31 | > 5 | | 0,26 | nd | > 5 | |
| 4 | nd | | > 5 | | nd | | > 5 | |
| 5 | nd | | 2,22 | 2,32 | nd | | 3,11 | 3,12 |
| 6 | nd | | 1,91 | 1,98 | nd | | 2,61 | 2,67 |
| 7 | nd | | 1,58 | 1,66 | nd | | 1,24 | 1,64 |
| 8 | nd | | 1,06 | 1,26 | nd | | 1,34 | 1,37 |
| 9 | nd | | 0,88 | 0,91 | nd | | 0,91 | 1,08 |
| nd = unterder Nachweisgrenze | | | | | | | | |

Wie man sieht, sind die erfindungsgemäßen Verbunde nach drei Tagen migrationsfrei.

## Patentansprüche

1. Lösungsmittelfreie Zweikomponentenpolyurethanklebstoffsysteme, auf Basis von Hydroxylpolyestern (A) und Isocyanatgruppen enthaltenden Prepolymeren (B) in einem Verhältnis der Hydroxylgruppen zu freien Isocyanatgruppen von 1:1,05 bis 1:2,0, dadurch gekennzeichnet, daß der Hydroxylpolyester
A mit einer Hydroxylzahl von 80 bis 200 aus
54 bis 58 mol-% einer Polyolmischung aus (i) 70 bis 90 mol-% Hexandiol-1,6 und (ii) 10 bis 30 mol-% mindestens eines höherwertigen Alkohols, ausgewählt aus der Gruppe bestehend aus Trimethylolpropan, Glyzerin, Pentaerythrit und Gemischen dieser Polyole, und
46 bis 42 mol-% einer Dicarbonsäuremischung aus (iii) 50 bis 80 mol-% Isophthalsäure, (iv) 30 bis 20 mol-% mindestens einer Dicarbonsäure der Formel HOOC-(CH₂)ₙ-COOH (n = eine ganze Zahl von 2 bis 8) und (v) 0 bis 20 mol-% mindestens einer Dicarbonsäure oder mindestens eines Dicarbonsäureanhydrids, ausgewählt aus der Gruppe bestehend aus Terephthalsäure, Phthalsäure, Phthalsäureanhydrid, Tetrahydro- bzw. Hexahydropthalsäureanhydrid, besteht,
und das Isocyanatgruppen enthaltende Prepolymer
B aus Polyetherpolyolen mit einem mittleren Molekulargewicht von 400 bis 1500, 2,4- oder 2,6-Toloylendiisocyanat und deren Gemischen besteht und einen Monomergehalt von kleiner 0,15 Gew.-% und einem Isocyanatgehalt zwischen 4 und 11 Gew.-% aufweist.

2. Zweikomponentenklebstoff nach Anspruch 1, dadurch gekennzeichnet, daß der Hydroxylpolyester (A) aus Hexandiol-1,6, Trimethylolpropan und Isophthalsäure, Adipinsäure und gegebenenfalls Phthalsäue aufgebaut ist.

3. Zweikomponentenklebstoff nach Anspruch 1 oder 2, dadurch gekennzeichnet, daß das Isocyanatgruppen enthaltende Prepolymer (B) einen Monomergehalt von kleiner 0,1 Gew.-% aufweist.

4. Zweikomponentenklebstoff nach einen der Ansprüche 1 bis 3, dadurch gekennzeichnet, daß das Isocyanatgruppen enthaltende Prepolymer (B) aus einer Polyetherpolyolmischung mit einer mittleren Funktionalität von 2,05 bis 2,40 aufgebaut ist.

5. Zweikomponentenklebstoff nach einem der Ansprüche 1 bis 4, dadurch gekennzeichnet, daß das Isocyanatgruppen enthaltende Prepolymer (B) auf 2,4-Toluylendiisocyanat aufgebaut ist.

## Claims

1. Solvent-free two-component polyurethane adhesive systems based on prepolymers (B) containing hydroxyl polyesters (A) and isocyanate groups with a ratio of hydroxyl groups to free isocyanate groups of 1:1.05 to 1:2.0, characterised in that the hydroxyl polyester
A with a hydroxyl number of 80 to 200 consists of
54 to 58 mole % of a polyol mixture comprising (i) 70 to 90 mole % of 1,6-hexanediol and (ii) 10 to 30 mole % of at least one higher alcohol selected from the group consisting of trimethylolpropane, glycerol, pentaerythritol and mixtures of these polyols, and
42 to 46 mole % of a dicarboxylic acid mixture comprising (iii) 50 to 80 mole % of isophthalic acid, (iv) 30 to 20 mole % of at least one dicarboxylic acid of formula HOOC-(CH₂)ₙ-COOH (n = an integer from 2 to 8), and (v) 0 to 20 mole % of at least one dicarboxylic acid or of at least one dicarboxylic acid anhydride, selected from the group consisting of terephthalic acid, phthalic acid, phthalic anhydride, and tetrahydro- or hexahydrophthalic anhydride,
and the prepolymer B containing isocyanate groups
consists of polyether polyols with an average molecular weight of 400 to 1500, toluene 2,4- or 2,6-diisocyanate and mixtures thereof, and has a monomer content less than 0.15 % by weight and an isocyanate content between 4 and 11 % by weight.

2. A two-component adhesive according to claim 1, characterised in that the hydroxyl polyester (A) is synthesised from 1,6-hexanediol, trimethylolpropane, and isophthalic acid, adipic acid and optionally phthalic acid.

3. A two-component adhesive according to claim 1 or 2, characterised in that the prepolymer (B) containing isocyanate groups has a monomer content of less than 0.1 % by weight.

4. A two-component adhesive according to any one of claims 1 to 3, characterised in that the prepolymer (B) containing isocyanate groups is synthesised from a polyether polyol mixture with an average functionality of 2.05 to 2.40.

5. A two-component adhesive according to any one of claims 1 to 4, characterised in that the prepolymer (B) containing isocyanate groups is synthesised from toluene 2,4-diisocyanate.

## Revendications

1. Colles de polyuréthanes à deux composants, sans solvant, à base de polyéthers hydroxylés (A) et de prépolymères à groupes isocyanates (B), à un rapport de 1:1,05 à 1:2,0 entre les groupes hydroxy et les groupes isocyanates libres, caractérisées en ce que le polyester hydroxylé
A, ayant un indice d'hydroxyle de 80 à 200, consiste en
54 à 58 mol% d'un mélange de polyols consistant lui-même en (i) 70 à 90 mol% d'hexanediol-1,6 et (ii) 10 à 30 mol% d'au moins un alcool polyvalent choisi dans le groupe formé par le triméthylolpropane, le glycérol, le pentaérythritol et leurs mélanges, et
46 à 42 mol% d'un mélange d'acides dicarboxyliques consistant lui-même en (iii) 50 à 80 mol% d'acide isophtalique, (iv) 30 à 20 mol% d'au moins un acide dicarboxylique de formule HOOC-(CH₂)ₙ-COOH (n = nombre entier allant de 2 à 8) et (v) 0 à 20 mol% d'au moins un acide dicarboxylique ou d'au moins un anhydride d'acide dicarboxylique choisi dans le groupe consistant en l'acide téréphtalique, l'acide phtalique, l'anhydride phtalique, l'anhydride tétrahydro- ou hexahydro-phtalique,
et le prépolymère à groupes isocyanates
B consiste en polyétherpolyols de poids moléculaire moyen 400 à 1500, le 2,4- ou le 2,6-toluylènediisocyanate ou leurs mélanges, et il a une teneur en monomères inférieure à 0,15% en poids et une teneur en isocyanate qui se situe entre 4 et 11% en poids.

2. Colle à deux composants selon la revendication 1, caractérisée en ce que le polyéther hydroxylé (A) est constitué de l'hexanediol-1,6, du triméthylolpropane et de l'acide isophtalique, de l'acide adipique et le cas échéant de l'acide phtalique.

3. Colle à deux composants selon la revendication 1 ou 2, caractérisée en ce que le prépolymère à groupes isocyanates (B) a une teneur en monomère inférieure à 0,1% en poids.

4. Colle à deux composants selon l'une des revendications 1 à 3, caractérisée en ce que le prépolymère à groupes isocyanates (B) a été préparé à partir d'un mélange de polyétherpolyols ayant une fonctionnalité moyenne de 2,05 à 2,40.

5. Colle à deux composants selon l'une des revendications 1 à 4, caractérisée en ce que le prépolymère à groupes isocyanates (B) a été préparé à partir du 2,4-toluylènediisocyanate.
